# FASCICULE DE BREVET EUROPEEN

(11) **EP 2 783 778 B1**
(45) Date de publication et mention de la délivrance du brevet: **09.03.2016**
(21) Numéro de dépôt: 14161173.1
(22) Date de dépôt: 21.03.2014
(51) Int. Cl.: B23C 5/10

(54) **Outil et procédé de fraisage de pièce métallique**
Werkzeug und Fräsverfahren eines Metallteils
Tool and method for milling a metal part

(30) Priorité: 25.03.2013 FR 1352684
(43) Date de publication de la demande: 01.10.2014
(73) Titulaire: Palumbo Industries, 74130 Vougy (FR)
(72) Inventeur: Palumbo, Raphaël, 74460 MARNAZ (FR)
(74) Mandataire: Croonenbroek, Thomas Jakob

(56) Documents cités:
- US-A1- 2003 133 763
- US-A1- 2005 031 421
- US-A1- 2009 060 662
- US-A1- 2012 207 869

## Description

La présente invention concerne le domaine du fraisage mécanique, plus particulièrement le fraisage d'une pièce métallique en vue d'obtenir un état de surface prédéterminé. Un tel fraisage est montré par example par le US 2005/0031421 A1, ou par le US 2012/0207869 A1.

L'invention concerne un procédé de fraisage dans le cadre de l'obtention d'une pièce de dispositif d'éclairage de véhicule automobile. Le dispositif d'éclairage comporte en particulier deux modes d'éclairages : longue portée (« pleins phares ») et de croisement (« feux de route »).

Lors du fonctionnement en mode longue portée, le faisceau obtenu est dirigé droit vers l'avant du véhicule, pour une portée maximale, généralement de l'ordre de 150 mètres. En mode de fonctionnement de croisement, le faisceau obtenu est dirigé vers le bas, la portée s'en trouve alors réduite à environ 80 mètres, mais les conducteurs d'autres véhicules situés vers l'avant sont moins susceptibles d'être éblouis.

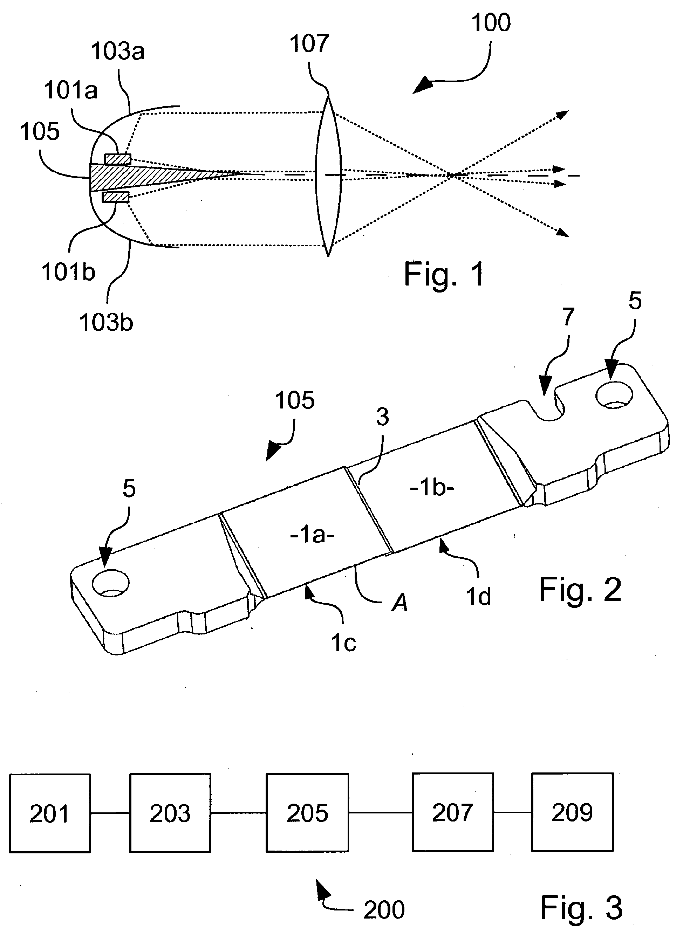

La figure 1 montre un mode de réalisation d'un tel dispositif d'éclairage 100. Le dispositif d'éclairage 100 comporte deux sources lumineuses 101a, 101b, par exemple des diodes électroluminescentes. Lesdites sources lumineuses 101a, 101b sont situées dans des miroirs convexes respectifs 103a, 103b, d'axe optique dirigé vers l'avant du véhicule, formant les faisceaux longue portée et de croisement respectivement à partir de la lumière d'une des sources lumineuses 101a, 101b.

Les miroirs convexes 103a, 103b focalisent la lumière émise par les sources lumineuses 101a, 101b, et la dirigent vers l'avant. Lesdits miroirs 103a, 103b sont ouverts sur un côté, et sont situés de part-et-d'autres d'une séparatrice 105, représentée ici en coupe. La séparatrice 105 est de section triangulaire très aplatie, avec une arête A située vers l'avant. À l'avant de la séparatrice 105 se trouve une lentille 107 qui met en forme les faisceaux lumineux émis.

Pour un bon fonctionnement du dispositif d'éclairage, la séparatrice 105 doit présenter les qualités suivantes :
- des surfaces hautement réfléchissantes (préférentiellement plus de 80%), afin d'améliorer le rendement énergétique du dispositif, ce qui requiert de réduire la rugosité totale en deçà du micromètre,
- une arête *A* avant très fine (épaisseur inférieure à 100 microns) et rectiligne, afin de réduire au minimum et possiblement rendre imperceptible une fine bande de séparation entre les faisceaux longue portée et de croisement (bande sombre) qui se crée sinon.

Pour obtenir une arête *A* de finesse suffisante il est avantageux de privilégier les métaux, en particulier l'aluminium comme matériau. Cependant les procédés de fraisage usuels ne permettent pas d'obtenir une surface suffisamment réfléchissante.

En outre, la présence de l'arête *A* qui doit être maintenue en l'état empêche le recours aux procédés d'agression ou d'application chimique ou électrochimiques usuels pour l'obtention des surfaces réfléchissantes, lesdits procédés détériorant l'arête *A*. En particulier, l'application d'acides pour le décapage ou le dépôt par électrolyse de métal déforment l'arête *A*.

Afin de répondre au moins partiellement aux problèmes précédemment mentionné, l'invention a pour objet un outil de fraisage selon le revendication 1, caractérisé en ce qu'il comporte une dent de fraisage unique, destinée à être entraînée en rotation à une vitesse comprise entre 8000 et 20000 tours par minute, l'outil présentant une vitesse d'avance de 300 à 600 millimètres par minute, et ladite dent présentant :
- un angle d'hélice nul,
- un angle de coupe nul,
- un plat de planage d'une longueur comprise entre 1,3 et 1,5 millimètres, ayant une dépouille comprise entre 5° et 8°, et situé à une distance à l'axe de rotation (*B*) de 4 à 8 millimètres.

L'aplat de planage, utilisé dans les conditions mentionnées permet de fraiser la surface en en générant qu'un minimum de vibrations de sorte à obtenir une rugosité suffisamment basse.

L'outil de fraisage peut comporter en outre une ou plusieurs des caractéristiques suivantes.

La dent de fraisage est en diamant synthétique, en particulier monocristallin.

La dent de fraisage présente en outre un chanfrein avant, situé à l'extrémité distale de l'aplat de planage, formant avec l'axe de rotation un angle de 1° à 60°, et ayant une dépouille comprise entre 8° et 10°.

L'angle formé par le chanfrein avant avec l'axe de rotation correspond à un angle formé par un chanfrein en bordure de surface à fraiser.

Il comporte en outre un décrochage arrière, situé à l'extrémité proximale de l'aplat de planage, formant avec l'axe de rotation un angle de 70° à 88°.

L'invention concerne aussi le procédé de fraisage associé d'une pièce métallique en aluminium pour l'obtention d'un état de surface de réflectivité importante selon la revendication 7, caractérisé en ce qu'il comporte les étapes :
- la pièce métallique est bridée sur un dispositif anti-vibrations comportant un tampon élastomère, et des éléments élastiques portant ledit tampon élastomère,
- un outil de fraisage est passé sur une surface de la pièce métallique, ledit outil de fraisage comportant une dent de fraisage unique, entraînée en rotation à une vitesse de rotation comprise entre 8000 et 20000 tours par minute, l'outil présentant une vitesse d'avance de 300 à 600 millimètres par minute, et ladite dent présentant :
   - un angle d'hélice nul,
   - un angle de coupe nul,
   - un plat de planage d'une longueur comprise entre 1,3 et 1,5 millimètres, ayant une dépouille comprise entre 5° et 8°, et situé à une distance à l'axe de rotation de 4 à 8 millimètres.

Ledit procédé peut comporter en outre une étape supplémentaire de fraisage préalable, effectuée avant l'étape dans laquelle l'outil de fraisage est passé sur la surface, étape supplémentaire dans laquelle un fraisage préliminaire de la surface est effectué, de sorte à laisser une surépaisseur de 1 à 5 microns.

Lors de l'étape dans laquelle la pièce métallique est bridée sur le tampon élastomère ledit tampon élastomère est avantageusement enfoncé d'environ 0,5 à 3mm.

Lors de l'étape dans laquelle ladite pièce métallique est calée sur le tampon élastomère, la pièce métallique est avantageusement disposée de sorte que l'arête forme un surplomb de 0,05 et 0,2 millimètres.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre de façon schématique un dispositif d'éclairage utilisant une séparatrice vu en coupe longitudinale,
- la figure 2 montre une séparatrice obtenue par le procédé selon l'invention en perspective,
- la figure 3 montre un organigramme schématique d'un procédé de fraisage particulier selon l'invention,
- la figure 4 montre un support de pièce métallique tel qu'il peut être utilisé dans le procédé,
- la figure 5 montre un dispositif anti-vibrations de support de pièce métallique de la figure 4,
- la figure 6 montre un mode de réalisation d'outil de fraisage appliqué sur une séparatrice lors du procédé de fraisage,
- la figure 7 est une vue rapproché de la dent de l'outil de la figure 6,
- la figure 8 est une vue en coupe de l'outil de la figure 6 et 7 au niveau de la dent,
- La figure 9 montre partiellement une séparatrice au cours d'une étape du fraisage,

Sur toutes les figures, les mêmes références se rapportent aux mêmes éléments.

En figure 2 est montré de façon schématique un mode de réalisation de séparatrice 105 telle qu'utilisée en figure 1. Les directions telles que « frontal », « latéral », « avant/arrière » sont prises par rapport à l'orientation de la séparatrice 105 en figure 1, l'avant correspondant à la direction principale du faisceau lumineux (voir figure 1).

Ladite séparatrice 105 comporte deux surfaces réfléchissantes 1a, 1b de chaque côté et inclinées dans le sens longitudinal, séparées par un chanfrein séparateur 3, de quelques dixièmes de millimètres et incliné à environ 45°. Le chanfrein séparateur 3 permet d'orienter différemment les surfaces 1a, 1b et 1c, 1d afin de mettre en forme le faisceau lumineux du dispositif d'éclairage. Le chanfrein séparateur 3 permet d'obtenir un faisceau de dispositif d'éclairage 100 avec une portion de cône relevée par rapport au reste, éclairant plus loin au niveau du bas-côté de la route.

La séparatrice 105 est réalisée en alliages d'aluminium, en particulier en alliages d'aluminium doux, par exemple les aluminiums des séries 6000 et 7000, de préférence relativement pauvres en éléments additionnels, par exemple l'alliage d'aluminium 6060.

La séparatrice 105 comporte des perçages 5, qui permettent le maintient de ladite séparatrice 105 lors de son usinage. Elle comporte aussi ici un creux détrompeur 7 sous forme d'un renfoncement sur l'un de ses côtés pour l'orientation de la pièce.

La séparatrice 105 est obtenue par fraisage d'une ébauche obtenue par exemple par découpage. Un exemple de procédé de fraisage 200 est illustré en figure 3, sous forme d'organigramme simplifié.

La première étape 201 est ici un préfraisage, effectué selon des modalités connues, de sorte à ne laisser qu'une surépaisseur comprise entre 1 et 5 micromètres (fraisage haute précision) au moins au niveau des surfaces 1a, 1b, 1c, 1d, destinées à devenir réfléchissantes.

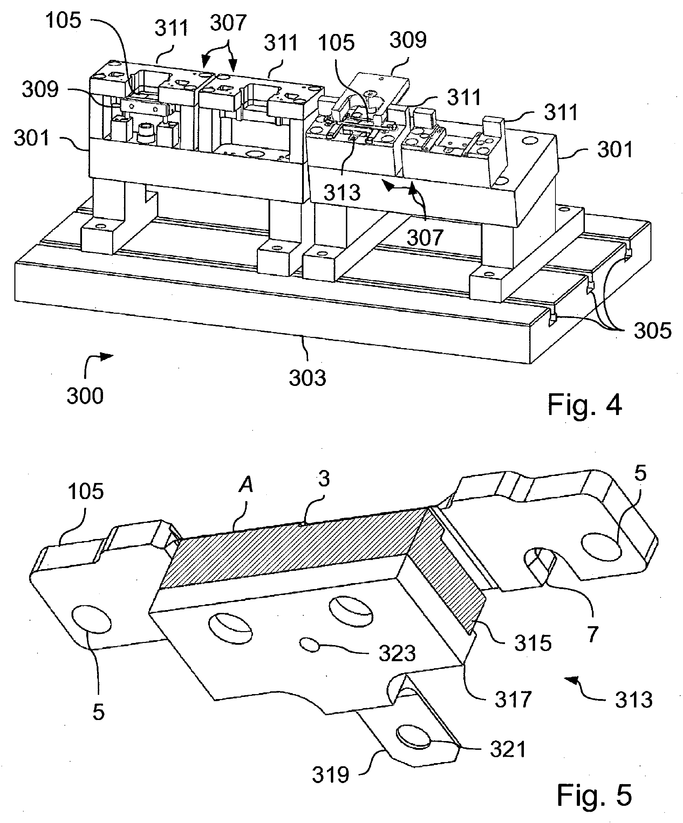

En deuxième étape 203, l'ébauche préfraisée est disposée et bridée sur un support 300 dont un mode de réalisation est représenté en figures 4 et 5. Le support 300 comporte deux tables 301, de préférence réalisées de façon à être lourde, et fixées sur un support 303, ici par insertion d'empattements (non visibles) aux pieds des tables 301 dans des rails 305 du support 303. Les tables 301 comportent au moins un, ici chacune deux (soit quatre en tout), emplacements 307 de travail.

Aux emplacements 307 sont disposées et bridées les séparatrices 105 pour leur usinage. Les emplacements 307 comportent à cette fin des doigts (non visibles) qui viennent s'insérer dans les perçages 5 et les détrompeurs 7 desdites séparatrices 105.

Les tables 301 présentent en particulier respectivement un plateau incliné selon un angle correspondant à l'angle donné à la surface 1a, 1b, 1c, 1d usinée, de sorte que les mouvements de l'outil de fraisage soient horizontaux. Les tables 301 de la figure 4 montrent chacune un mode de réalisation particulier.

Pour la table 301 située sur la gauche en figure 4, la séparatrice 105 est initialement disposée sur un mors mobile 309 (qui comporte les doigts qui s'insèrent dans les perçages 5 et détrompeurs 7), ledit mors mobile 309 venant ensuite appuyer ladite séparatrice 105 contre un mors fixe 311 pour le bridage de la séparatrice 105. Pour la table 301 située à droite en figure 5, la séparatrice 105 est initialement disposée sur le mors fixe 311, et le mors mobile 309 vient ensuite recouvrir et appuyer sur la séparatrice 105.

La séparatrice 105 est placée dans les emplacements 307 sur un dispositif anti-vibrations 313, montré plus en détails en figure 5.

En figure 5 est vu un dispositif anti-vibrations 313 sur lequel s'appuie une séparatrice 105. Le dispositif anti-vibrations 313 comporte un tampon élastomère 315, disposé sur un plateau 317 métallique, et un élément élastique 319, ici sous forme d'une lame-ressort.

La lame-ressort 319 est ici en métal, par exemple de l'acier et comporte un perçage 321 pour sa fixation à l'emplacement 307, en particulier au moyen d'une vis, et est réalisée sous forme de prolongement plus fin du plateau 317, et en particulier venant de matière avec ledit plateau 317.

Le plateau 317 comporte ici en outre un perçage 323 pour la fixation du tampon élastomère 315 au moyen d'une vis qui, avantageusement, ne traverse pas le tampon 315. De la sorte les tampons élastomère 315 peuvent être remplacés plus aisément.

Le tampon élastomère 315 a une dureté de 60 à 90 Shore, et peut notamment être réalisé en caoutchouc, potentiellement réticulé.

La séparatrice 105 est notamment disposée sur le tampon élastomère 315 de sorte que l'arête *A* fine dépasse de la surface frontale du tampon en formant un surplomb entre 0,05 et 0,2mm, préférentiellement autour de 0,1mm. En effet, une longueur plus importante entraîne un risque d'oscillations de la portion en surplomb, ce qui entraîne une augmentation de la rugosité. Une longueur inférieure entraîne un risque d'attaque du tampon élastomère 315 par l'outil 9, détériorant ledit tampon 315 tout en polluant potentiellement l'outil 9 avec des résidus d'élastomère.

La lame-ressort 319 est déformée lors de la fixation de la séparatrice 105, plus particulièrement sous l'effet de la compression par le mors mobile 309. Le tampon élastomère 315 absorbe les micro-vibrations résultant du fraisage, tandis qu'une compression excessive du tampon contre la pièce 105 à usiner marque la surface de celle-ci. Cette utilisation combinée d'éléments élastiques 319 et de tampon élastomère 315 permet de réduire les vibrations de manière suffisante pour l'obtention d'un état de surface de réflectivité importante.

D'autres modes de réalisation peuvent comprendre d'autres formes d'éléments élastiques 319 : par exemple des ressorts hélicoïdaux, ou une combinaison de ressorts hélicoïdaux et de lames-ressort.

Les lames-ressort 319 ont pour avantage de ne pas nécessiter de trou d'implémentation dans lesquels les moyens élastiques sont partiellement insérés. Par exemple dans le cas des ressorts hélicoïdaux les trous peuvent être le lieu d'une accumulation de copeaux, ce qui peut entraîner une modification du comportement des éléments élastiques 319 de manière non contrôlée, et donc nuire au rendu du fraisage.

Les éléments élastiques 319 ont typiquement une raideur entre 0,3 et 0,7 N/mm, préférentiellement autour de 0,5 N/mm. L'enfoncement lors de la mise en place de la pièce 203 lorsque le mors mobile 309 est appuyé contre le mors fixe 311 est de l'ordre de 0,5 à 3mm, préférentiellement autour de 1mm.

Lors de l'étape suivante 205, un outil de fraisage 9 est utilisé pour fraiser au moins une partie de la surface de la séparatrice 105.

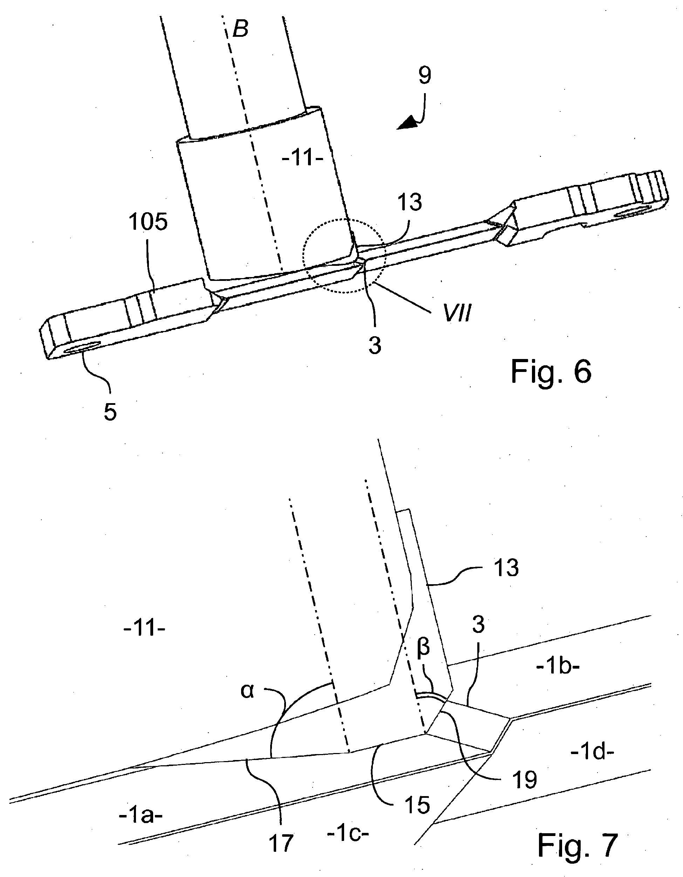

Un tel outil de fraisage 9 est représenté en figure 6, en contact d'une séparatrice 105. L'outil de fraisage 9 comporte un corps cylindrique 11, avec à une de ses extrémités une dent 13 en diamant, en particulier monocristallin et synthétique. En figure 6, l'outil 9 est appliqué contre la surface la à fraiser. La figure 7 est un plan rapproché de la zone dénotée *VII* de la figure 7, contenant notamment la dent 13 et le chanfrein séparateur 3 de la séparatrice 105.

La dent 13 est unique du fait que le faux rond de l'outil 9 risque de détériorer le rendu du fraisage 200 si plusieurs dents 13 sont présentes et faiblement décalées les unes par rapport aux autres.

Le diamant utilisé est avantageusement synthétique à la fois pour le prix de revient et sa grande pureté, garantissant des arêtes rectilignes à l'affûtage. Le fait que la dent 13 soit réalisée sous forme monocristalline assure l'absence de joints de grain qui sont d'un ordre de grandeur micrométrique, et peuvent donc réduire la réflectivité de façon significative.

La dent 13 comporte un angle d'hélice nul, et un angle de coupe nul.

La dent 13 comporte un aplat de planage 15, d'une longueur d'environ 1,4 millimètres plus ou moins 0,1 millimètres, et situé à une distance radiale de 4 à 8 millimètres de l'axe de rotation *B*. Le plat de planage 15 est la partie de la dent 13 principalement en contact avec la surface à fraiser. Une longueur inférieure force à diminuer la vitesse d'avance, ce qui ralentit le procédé, et une longueur supérieure entraîne une friction importante pouvant entraîner des vibrations importantes et/ou des dégradations de la surface par brûlure.

La dent 13 comporte en outre un décrochage 17, prolongeant l'arête de la dent 13 dans la direction de l'axe de rotation *B* de l'outil 9. Le décrochage 17 forme avec l'axe de rotation *B* un angle *α* compris entre 70° et 88°, préférentiellement autour de 80°. Cette plage de valeurs est un compromis entre l'évacuation systématique des copeaux lors du fraisage, et la probabilité de rayer la surface avec le coin que forme le décrochage 17 avec l'aplat 15. L'évacuation des copeaux augmente quand l'angle formé avec l'axe de rotation *B* est réduit et la probabilité de rayer la surface avec le coin diminue quand ledit angle est augmenté.

La dent 13 comporte aussi un chanfrein avant 19, situé du côté radialement distal de l'aplat 15. Ce chanfrein avant 19 forme avec l'axe de rotation *B* un angle *β* de 45°, correspondant à l'angle du chanfrein séparateur 3. Cette correspondance permet de façonner le chanfrein séparateur 3 en un seul passage lors du fraisage de la surface située en retrait la (particulièrement visible en figure 5) ou 1c. De manière générale un angle compris environ entre 1° et 60° est toutefois fonctionnel.

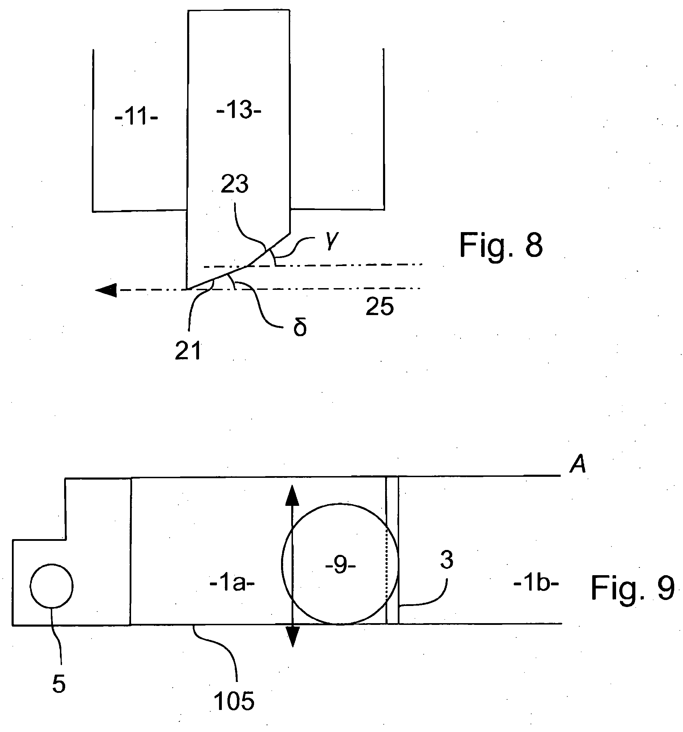

La figure 8 est une vue en coupe verticale de l'outil 9, au niveau de l'aplat de planage 15. On peut notamment voir en figure 8 le profil de la dent 13, présentant une dépouille 21 et une contre-dépouille 23. Bien qu'en figure 8 la coupe soit effectuée au niveau de l'aplat de planage 15, le décrochage 17 et le chanfrein avant présentent une structure similaire.

L'aplat de planage 15 présente une dépouille 21 formant avec la direction de coupe 25 de l'outil 9 un angle γ d'environ 5° à 8°, et une contre-dépouille 23 formant avec la direction d'avancée 25 de l'outil 9 un angle δ d'environ 10° à 14°. Avantageusement, la dépouille est de 6° plus ou moins 10' sur une longueur de 0,1 à 0,4mm, préférentiellement environ 0,25 millimètres.

Le décrochage 17 présente une dépouille 21 formant avec la direction d'avancée 25 de l'outil 9 un angle γ d'environ 10° à 14°, préférentiellement 12° plus ou moins 30'.

Le chanfrein avant 19 présente une dépouille 21 formant avec la direction d'avancée 25 de l'outil 9 un angle γ d'environ 6° à 10°, préférentiellement de 8° plus ou moins 10', et une une contre-dépouille 23 formant avec la direction d'avancée 25 de l'outil 9 un angle δ d'environ 10° à 14°, préférentiellement 12° plus ou moins 30'.

L'outil 9 est ici appliqué avec une vitesse de rotation de 8000 à 20000 tours par minute, et une avance de 300 à 600 millimètres par minute.

La figure 9 montre plus en détail l'étape 205 dans laquelle l'outil de fraisage 9 est utilisé pour usiner le chanfrein séparateur 3.

L'outil 9 est appliqué à la surface 1a, en particulier dans le sens longitudinal le long du chanfrein séparateur 3. La correspondance entre les angles du chanfrein séparateur 3 de la séparatrice 105 et du chanfrein avant 19 de la dent 13 permet l'obtention du chanfrein séparateur 3 en un seul passage longitudinal.

Lors des étapes suivantes 207 et 209, l'ébauche de séparatrice 105 est retournée et bridée (étape 207) sur un emplacement 307 de support 300, en particulier sur une table 301 dont le plateau est incliné selon un angle potentiellement différent correspondant à l'inclinaison des surfaces 1c, 1d de l'autre côté de la séparatrice 105. Ensuite (étape 209), l'outil de fraisage 9 est utilisé pour fraiser les surfaces 1c, 1d initialement situées sur la face opposée et inaccessible de la séparatrice 105.

Le procédé de fraisage 200 est ici employé dans le cas particulier d'un processus d'usinage d'une séparatrice 105 de dispositif d'éclairage 100 de véhicule automobile 100, mais peut aussi être appliqué à l'obtention d'une surface de haute réflectivité (supérieure à 85 % en particulier) sur d'autres types de pièces métalliques en aluminium à usiner, en particulier avec une portion mince, et terminée par une arête fine *A*.

## Revendications

1. Outil de fraisage, **caractérisé en ce qu'**il comporte une dent de fraisage (13) unique, destinée à être entraînée en rotation à une vitesse comprise entre 8000 et 20000 tours par minute, l'outil (9) présentant une vitesse d'avance de 300 à 600 millimètres par minute, et ladite dent (13) présentant :
- un angle d'hélice nul,
- un angle de coupe nul,
- un plat de planage (15) d'une longueur comprise entre 1,3 et 1,5 millimètres, ayant une dépouille comprise entre 5° et 8°, et situé à une distance à l'axe de rotation (B) de 4 à 8 millimètres.

2. Outil de fraisage selon la revendication 1, **caractérisé en ce que** la dent de fraisage (13) est en diamant synthétique.

3. Outil de fraisage selon la revendication 1 ou 2, **caractérisé en ce que** la dent de fraisage (13) est en diamant monocristallin.

4. Outil de fraisage selon la revendication 1, 2 ou 3 **caractérisé en ce que** la dent de fraisage (13) présente en outre un chanfrein avant (19), situé à l'extrémité distale de l'aplat de planage (15), formant avec l'axe de rotation (*B*) un angle de 1° à 60°, et ayant une dépouille comprise entre 8° et 10°.

5. Outil de fraisage selon la revendication 4, **caractérisé en ce que** l'angle formé par le chanfrein avant (19) avec l'axe de rotation (*B*) correspond à un angle formé par un chanfrein (3) en bordure de surface à fraiser (1a, 1b, 1c, 1d).

6. Outil de fraisage selon l'une des revendications 1 à 5, **caractérisé en ce qu'**il comporte en outre un décrochage arrière (17), situé à l'extrémité proximale de l'aplat de planage, formant avec l'axe de rotation (*B*) un angle de 70° à 88°.

7. Procédé de fraisage (200) d'une pièce métallique en aluminium pour l'obtention d'un état de surface de réflectivité importante, **caractérisé en ce qu'**il comporte les étapes :
- la pièce métallique est bridée sur un dispositif anti-vibrations (313) comportant un tampon élastomère (315), et des éléments élastiques (319) portant ledit tampon élastomère (315),
- un outil de fraisage (9) est passé sur une surface (1a, 1b, 1c, 1d) de la pièce métallique, (105) ledit outil de fraisage (9) comportant une dent de fraisage (13) unique, entraînée en rotation à une vitesse de rotation comprise entre 8000 et 20000 tours par minute, l'outil (9) présentant une vitesse d'avance de 300 à 600 millimètres par minute, et ladite dent (13) présentant :
- un angle d'hélice nul,
- un angle de coupe nul,
- un plat de planage (15) d'une longueur comprise entre 1,3 et 1,5 millimètres, ayant une dépouille comprise entre 5° et 8°, et situé à une distance à l'axe de rotation (B) de 4 à 8 millimètres.

8. Procédé selon la revendication 7, **caractérisé en ce qu'**il comporte en outre une étape supplémentaire de fraisage préalable (201), effectuée avant l'étape (205) dans laquelle l'outil de fraisage (9) est passé sur la surface (1a, 1b, 1c, 1d), étape (201) supplémentaire dans laquelle un fraisage préliminaire de la surface est effectué, de sorte à laisser une surépaisseur de 1 à 5 microns.

9. Procédé selon la revendication 7 ou 8, **caractérisé en ce que** lors de l'étape (203) dans laquelle la pièce métallique (105) est bridée sur le tampon élastomère (315) ledit tampon élastomère (315) est enfoncé d'environ 0,5 à 3mm.

10. Procédé selon l'une des revendications 7 à 9, **caractérisé en ce que** lors de l'étape (203) dans laquelle ladite pièce métallique est calée sur le tampon élastomère (315), la pièce métallique (105) est disposée de sorte que l'arête (A) forme un surplomb de 0,05 et 0,2 millimètres.

## Patentansprüche

1. Fräswerkzeug, **dadurch gekennzeichnet, dass** es einen einzigen Fräszahn (13) umfasst, der dazu bestimmt ist, mit einer Drehzahl von zwischen 8000 und 20 000 Umdrehungen pro Minute drehangetrieben zu werden, wobei das Werkzeug (9) eine Vorschubgeschwindigkeit von 300 bis 600 Millimetern pro Minute aufweist, wobei der Zahn (13) Folgendes aufweist:
- einen Schrägungswinkel von null,
- einen Schnittwinkel von null,
- eine Anflachfläche (15) mit einer Länge zwischen 1,3 und 1,5 Millimetern, die einen Freiwinkel zwischen 5° und 8° aufweist und in einem Abstand von 4 bis 8 Millimetern von der Rotationsachse (B) angeordnet ist.

2. Fräswerkzeug nach Anspruch 1, **dadurch gekennzeichnet, dass** der Fräszahn (13) aus synthetischem Diamant ist.

3. Fräswerkzeug nach Anspruch 1 oder 2, **dadurch gekennzeichnet, dass** der Fräszahn (13) aus monokristallinem Diamant ist.

4. Fräswerkzeug nach Anspruch 1, 2 oder 3, **dadurch gekennzeichnet, dass** der Fräszahn (13) ferner eine vordere Fase (19) aufweist, die am distalen Ende der Anflachfläche (15) angeordnet ist, einen Winkel von 1° bis 60° mit der Rotationsachse (B) bildet und einen Freiwinkel zwischen 8° und 10° hat.

5. Fräswerkzeug nach Anspruch 4, **dadurch gekennzeichnet, dass** der durch die vordere Fase (19) mit der Rotationsachse (*B*) gebildete Winkel einem durch eine Fase (3) am Rand der zu fräsenden Fläche (1a, 1b, 1c, 1d) gebildeten Winkel entspricht.

6. Fräswerkzeug nach einem der Ansprüche 1 bis 5, **dadurch gekennzeichnet, dass** es ferner einen hinteren Absatz (17) umfasst, der am proximalen Ende der Anflachfläche angeordnet ist und einen Winkel von 70° bis 88° mit der Rotationsachse (B) bildet.

7. Verfahren (200) zum Fräsen eines Metallteils aus Aluminium zum Erhalt einer Oberflächengüte mit hoher Reflektivität, **dadurch gekennzeichnet, dass** es die folgenden Schritte umfasst:
- das Metallteil wird in einer schwingungsdämpfenden Vorrichtung (313) eingespannt, die einen elastomeren Puffer (315) und den elastomeren Puffer (315) tragende elastische Elemente (319) umfasst,
- ein Fräswerkzeug (9) wird über eine Fläche (1a, 1b, 1c, 1d) des Metallteils (105) geführt, wobei das Fräswerkzeug (9) einen einzigen Fräszahn (13) umfasst, der mit einer Drehzahl von zwischen 8000 und 20 000 Umdrehungen pro Minute drehangetrieben wird, wobei das Werkzeug (9) eine Vorschubgeschwindigkeit von 300 bis 600 Millimetern pro Minute aufweist, wobei der Zahn (13) Folgendes aufweist:
- einen Schrägungswinkel von null,
- einen Schnittwinkel von null,
- eine Anflachfläche (15) mit einer Länge zwischen 1,3 und 1,5 Millimetern, die einen Freiwinkel zwischen 5° und 8° aufweist und in einem Abstand von 4 bis 8 Millimetern von der Rotationsachse (B) angeordnet ist.

8. Verfahren nach Anspruch 7, **dadurch gekennzeichnet, dass** es ferner einen zusätzlichen Vorfrässchritt (201) umfasst, der vor dem Schritt (205) durchgeführt wird, bei dem das Fräswerkzeug (9) über die Fläche (1a, 1b, 1c, 1d) geführt wird, wobei bei diesem zusätzlichen Schritt (201) eine Vorfräsung der Fläche erfolgt, nach der ein Übermaß von 1 bis 5 Mikrometern verbleibt.

9. Verfahren nach Anspruch 7 oder 8, **dadurch gekennzeichnet, dass** der elastomere Puffer (315) bei dem Schritt (203), bei dem das Metallteil (105) auf den elastomeren Puffer (315) gespannt wird, ungefähr 0,5 bis 3 mm weit eingedrückt wird.

10. Verfahren nach einem der Ansprüche 7 bis 9, **dadurch gekennzeichnet, dass** das Metallteil (105) bei dem Schritt (203), bei dem das Metallteil auf den elastomeren Puffer (315) geklemmt wird, so angeordnet wird, dass die Kante (A) eine Auskragung von 0,05 bis 0,2 Millimetern bildet.

## Claims

1. Milling tool, **characterized in that** it includes a single milling tooth (13), intended to be driven in rotation at a speed between 8,000 and 20,000 revolutions per minute, the tool (9) having a speed of advance of 300 to 600 millimetres per minutes, and said tooth (13) having:
- a zero helix angle,
- a zero cutting angle,
- a levelling flat (15) with a length between 1.3 and 1.5 millimetres having a relief between 5° and 8° and situated at a distance from the rotation axis (B) of 4 to 8 millimetres.

2. Milling tool according to Claim 1, **characterized in that** the milling tooth (13) is of synthetic diamond.

3. Milling tool according to Claim 1 or 2, **characterized in that** the milling tooth (13) is of monocrystalline diamond.

4. Milling tool according to Claim 1, 2 or 3 **characterized in that** the milling tooth (13) also has a front chamfer (19) situated at the distal end of the levelling flat (15) forming with the rotation axis (B) an angle of 1° to 60° and having a relief between 8° and 10°.

5. Milling tool according to Claim 4, **characterized in that** the angle formed by the front chamfer (19) with the rotation axis (B) corresponds to an angle formed by a chamfer (3) at the border of the surface (1a, 1b, 1c, 1d) to be milled.

6. Milling tool according to any one of Claims 1 to 5, **characterized in that** it further includes a rear recess (17) situated at the proximal end of the levelling flat forming with the rotation axis (B) an angle of 70° to 88°.

7. Method (200) of milling a metal part made of aluminium to obtain a surface state of high reflectivity, **characterized in that** it includes the following steps:
- the metal part is clamped to an anti-vibration device (313) including an elastomer pad (315) and elastic elements (319) carrying said elastomer pad (315),
- a milling tool (9) is passed over a surface (1a, 1b, 1c, 1d) of the metal part (105), said milling tool (9) including a single milling tooth (13), driven in rotation at a rotation speed between 8,000 and 20,000 revolutions per minute, the tool (9) having a speed of advance of 300 to 600 millimetres per minute, and said tooth (13) having:
- a zero helix angle,
- a zero cutting angle,
- a levelling flat (15) with a length between 1.3 and 1.5 millimetres having a relief between 5° and 8° and situated at a distance from the rotation axis (B) of 4 to 8 millimetres.

8. Method according to Claim 7, **characterized in that** it further includes a supplementary preliminary milling step (201) effected before the step (205) in which the milling tool (9) is passed over the surface (1a, 1b, 1c, 1d), supplementary step (201) in which preliminary milling of the surface is effected so as to leave an overthickness of 1 to 5 microns.

9. Method according to Claim 7 or 8, **characterized in that** during the step (203) in which the metal part (105) is clamped to the elastomer pad (315) said elastomer pad (315) is depressed of approximately 0.5 to 3 mm.

10. Method according to any one of Claims 7 to 9, **characterized in that** during the step (203) in which said metal part is locked to the elastomer pad (315), the metal part (105) is disposed so that the edge (A) forms an overhang between 0.05 and 0.2 millimetres.
